# EUROPÄISCHE PATENTSCHRIFT

(11) **EP 0 406 708 B1**
(45) Veröffentlichungstag und Bekanntmachung des Hinweises auf die Patenterteilung: **06.04.1994**
(21) Anmeldenummer: 90112386.9
(22) Anmeldetag: 29.06.1990
(51) Int. Cl.: F16C 3/02, F16F 15/28

(54) **Mit Wuchtgewichten versehbares Anschlussteil für Kardanwellen und Verfahren zur Auswuchtung**
Connecting piece for cardan shafts suitable to be equipped with balance weights and balancing method
Pièce de connexion pour arbre cardan capable d'être équipée avec des poids d'équilibrage et procédé d'équilibrage

(30) Priorität: 04.07.1989 DE 3921862
(43) Veröffentlichungstag der Anmeldung: 09.01.1991
(73) Patentinhaber: GKN AUTOMOTIVE AKTIENGESELLSCHAFT, D-53721 Siegburg (DE)
(72) Erfinder: Müller, Karl-Heinz, D-5248 Wissen (DE)
(74) Vertreter: Neumann, Ernst Dieter, Dipl.-Ing.

(56) Entgegenhaltungen:
- EP-A- 0 143 200
- EP-A- 0 161 326
- EP-A- 0 318 818
- CH-A- 365 912
- DE-A- 3 637 256
- GB-A- 2 119 063
- PATENT ABSTRACTS OF JAPAN Band 9, Nr. 198 (M-404)(1921), 15 August 1985; & JP - A - 6061302 (HONDA-GIKEN KOGYO K.K.) 09.04.1985

## Beschreibung

Die Erfindung betrifft ein Anschlußteil für Kardanwellen, mit einer antriebseitigen Zentrierung, einem radialen Flansch und einem wellenseitigen Anschlußstutzen zur Verbindung mit einer Kardanwelle eines Kraftfahrzeugs. Ein vergleichbares Anschlußteil ist aus der EP-A-0 318 818 bekannt.

Derartige Anschlußteile werden zur Verbindung mit den Antriebsaggregaten eines Kraftfahrzeugs mit der zu den angetriebenen Rädern führenden Kardanwelle eingesetzt. Zur Vermeidung von Geräuschen und Vibrationen durch produktionsbedingte Unwuchten, insbesondere im Material der Wellenrohre aufgrund unterschiedlicher Materialdichten und Materialanhäufungen, ist es erforderlich, die montierten Kardanwellen im Bereich der Anschlußteile auszuwuchten. Bisher wurden dazu an den erforderlichen Stellen entweder Erleichterungsbohrungen vorgenommen oder Ausgleichsgewichte z.B. mittels Klemmung oder Schweißung befestigt. Beides ist sehr zeit- und materialaufwendig und stört einen angegestrebten möglichst gleichmäßigen Produktionsablauf.

Aufgabe der vorliegenden Erfindung ist es, ein Anschlußteil für die Kardanwelle eines Kraftfahrzeuges zu schaffen, das mit geringem Aufwand hergestellt und ausgewuchtet werden kann.

Gelöst wird diese Aufgabe dadurch, daß der Flansch ein Kunststoff-Spritzgußteil ist und in seinem radial äußeren Bereich mit einer Vielzahl von ausgeformten Öffnungen zur Aufnahme von Wuchtgewichten versehen ist. Erfindungsgemäß wird das Anschlußteil als Kunststoff-Spritzgußteil hergestellt, wobei die Wuchtbohrungen im Flansch bei der Herstellung vorgeformt sind. Die Anordnung derselben im Flansch erleichtert die Zugänglichkeit. Durch diese Maßnahmen wird ein Anschlußteil für eine Kardanwelle, insbesondere für eine Kardanwelle aus Verbundwerkstoff geschaffen, das aufgrund der Vielzahl von vorgefertigten Öffnungen im Bedarfsfall mit einfachen Mitteln durch Einlage von Wuchtgewichten, insbesondere Wucktgewichten aus Blei, schnell und einfach ausgewuchtet werden kann.

Günstigerweise werden die Öffnungen als axial verlaufende Sacklöcher ausgebildet, die insbesondere auf einem konzentrisch zur Zentrierung verlaufenden Teilkreis des Flansches angeordnet sind. Eine Herstellung des Anschlußteils aus thermoplastisch verformbarem Kunststoff erleichtert die spätere Fixierung einzelner eingebrachter Wuchtgewichte.

Eine weitere Aufgabe der Erfindung ist es, ein einfaches Verfahren zum Auswuchten des Anschlußteiles für die Kardanwelle eines Kraftfahrzeuges zu schaffen.

Gelöst wird diese Aufgabe dadurch, daß in durch Rotationsmessungen bestimmte, in dem Flansch vorgeformte Öffnungen Wuchtgewichte eingefügt und durch thermoplastische Verformung des Flansches in ihrer Lage gesichert werden. Durch diese Maßnahmen wird ein Verfahren geschaffen, mit dem innerhalb kürzester Zeit eine Vielzahl von Anschlußteilen und mit ihnen verbundene Kardanwellen mit minimalen Aufwand ausgewuchtet werden können.

In günstiger Weise kann der Flansch im Randbereich zur Sicherung der Wuchtgewichte mittels Ultraschall erwärmt und dann mechanisch verformt werden. Daneben ist als ebenfalls schnell durchzuführendes Verfahren zur Sicherung das Heißprägen im Bereich der einzelnen eingesetzten Wuchtgewichte mittels geeignetem Werkzeug, z.B. einem Lötkolben möglich. Selbstverständlich können auch konventionelle Befestigungsmethoden wie Einkleben verwendet werden.

Eine andere günstige Ausführung kann elastische Noppen oder Kanten am Rand der Öffnungen umfassen, die nach dem Eindrücken der im Durchmesser größeren Wuchtgewichte zurückfedern und diese sichern. Die Mittel können in den Flansch eingeformt oder mechanisch ausgearbeitet sein.

Die Erfindung ist in der beiliegenden Zeichnung dargestellt und wird nachfolgend näher beschrieben; es zeigt:
- Fig. 1: die Draufsicht auf die Antriebsseite eines Anschlußteiles für eine Kardanwelle,
- Fig. 2: die Seitenansicht mit Teilschnitt eines Anschlußteils nach Fig. 1, mit angeklebter Kardanwelle,
- Fig. 3: die Draufsicht auf die Wellenseite eines Anschlußteiles nach der Fig. 1, mit einer Vielzahl von auf einem Teilkreis gleichmäßig verteilten, vorgeformten Öffnungen,
- Fig. 4: den Axialschnitt eines Anschlußteiles entlang der Linie B - B nach Fig. 1 mit eingestecktem Wuchtgewicht.

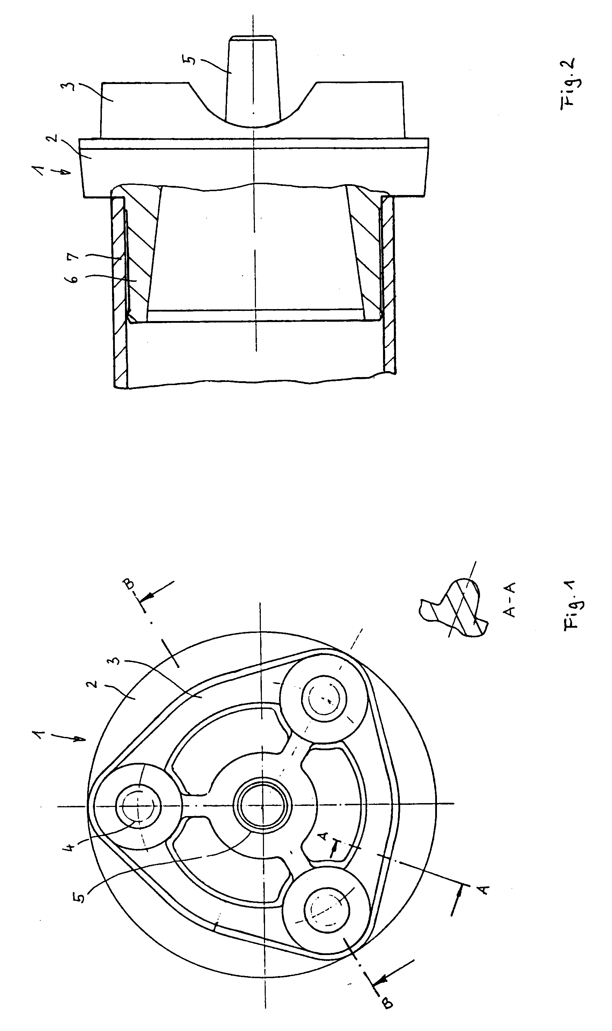

Das in der Fig. 1 dargestellte Anschlußteil 1 ist ein Kunststoff-Spritzgußteil, das im wesentlichen aus einem radial verlaufenden Flansch 2, an diesem Flansch 2 einstückig angeformten, axial verlaufenden Rippen 3 und einer antriebsseitigen Zentrierung 5 besteht. Zur Verbindung mit einem krafteinleitenden Aggregat, beispielsweise der Antriebsseite einer Fahrzeugkupplung, sind Gewindestopfen 4 vorgesehen, die aus Metall bestehen und zur besseren Verbindung in dem Kunststoff des Flansches 2 mit einer Rändelung versehen sind.

Wie die Fig. 2 zeigt, ist an den Flansch 2 auf der der Zentrierung 5 axial entgegengesetzten Wellenseite ein Anschlußstutzen 6 einstückig angeformt, der der Verbindung mit einer hier näher dargestellten, ebenfalls aus Kunststoff gefertigten Kardanwelle 7 dient. Die Kardanwelle 7 wird vorzugsweise mit dem Anschlußteil 1 verklebt.

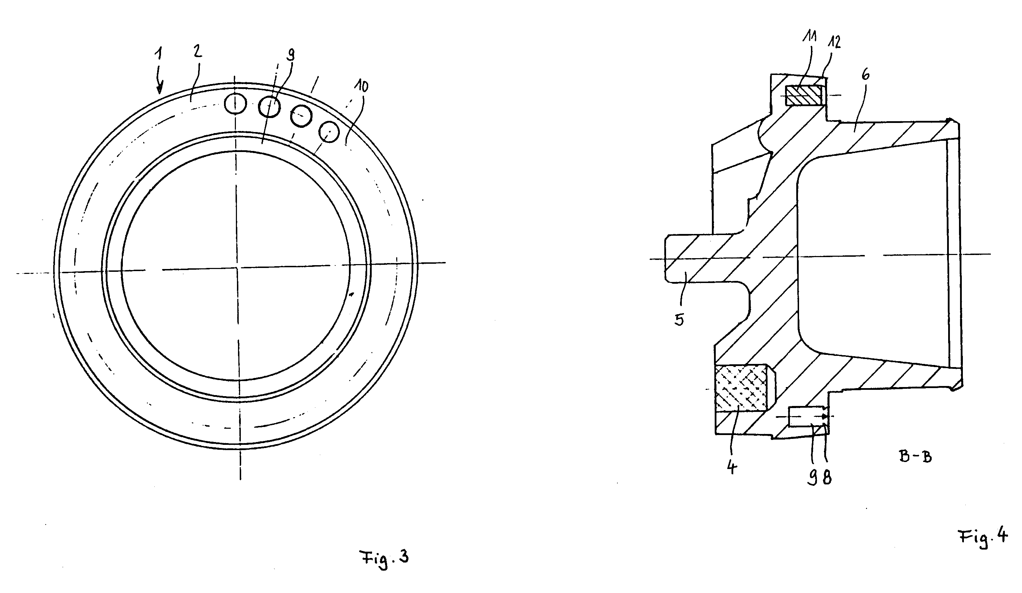

Wie die Fig. 3 zeigt, ist der Flansch 2 mit einer Vielzahl von Öffnungen 9 versehen, die bei der Herstellung dieses im Kunststoff-Spritzgießverfahren hergestellten Bauteiles gleich mit eingeformt werden. Es sind eine Vielzahl von Öffnungen 9 vorgesehen, die gleichmäßig auf einem konzentrisch zu der Zentrierung 5 verlaufenden Teilkreis 10 verteilt sind. Im Bedarfsfall, d.h., wenn das Anschlußteil 1 und/oder das Wellenrohr eine Unwucht aufweisen, die durch ein oder mehrere Gegengewichte ausgeglichen werden soll, können Wuchtgewichte 11 in die entsprechenden Öffnungen 9 eingesteckt werden. Die Wuchtgewichte 11 bestehen vorzugsweise aus Metall.

Wie Fig. 4, obere Bildhälfte zeigt, wird ein Wuchtgewicht 11 nach dem Einstecken durch eine plastisch verformte Kante 12 des Flansches 2 in seiner Lage festgelegt und gehalten. Die thermoplastische Verformung der Kante 12 erfolgt nach Erwärmung mittels Ultraschall oder durch Heißprägen. In Fig. 4, untere Bildhälfte, ist erkennbar, daß elastische Noppen 8 an den Rändern der Öffnungen 9 vorgesehen sind, die den Querschnitt verengen und ein eingedrücktes Wuchtgewicht sichern.

## Patentansprüche

1. Anschlußteil für Kardanwellen, mit einer antriebsseitigen Zentrierung, einem radialen Flansch und einem wellenseitigen Anschlußstutzen zur Verbindung mit einer Kardanwelle eines Kraftfahrzeugs,
dadurch gekennzeichnet,
daß der Flansch (2) ein Kunststoff-Spritzgußteil ist und in seinem radial äußeren Bereich mit einer Vielzahl von ausgeformten Öffnungen (9) zur Aufnahme von Wuchtgewichten (11) versehen ist.

2. Anschlußteil nach Anspruch 1,
dadurch gekennzeichnet,
daß die Öffnungen (9) in axialer Richtung verlaufende Sacklöcher sind.

3. Anschlußteil nach einem der Ansprüche 1 oder 2,
dadurch gekennzeichnet,
daß die Öffnungen (9) elastisch nachgiebige Mittel (8) zur Verengung des Öffnungsquerschnitts aufweisen.

4. Anschlußteil nach einem der Ansprüche 1 bis 3,
dadurch gekennzeichnet,
daß die Öffnungen (9) auf einem konzentrisch zur Zentrierung (5) verlaufenden Teilkreis (10) des Flansches (2) vorgesehen sind.

5. Anschlußteil nach einem der Ansprüche 1 bis 4,
dadurch gekennzeichnet,
daß der Flansch (2) aus einem thermoplastischen Kunststoff besteht.

6. Verfahren zum Auswuchten eines Anschlußteiles aus Kunststoff, mit einer antriebseitigen Zentrierung, einem radialen Flansch und einem wellenseitigen Anschlußstutzen zur Verbindung mit einer Kardanwelle eines Kraftfahrzeugs, nach einem oder mehreren der Ansprüche 1 bis 5,
dadurch gekennzeichnet,
daß in durch Rotationsmessungen bestimmte Öffnungen, in dem Flansch im Durchmesser angepaßte Wuchtgewichte eingesetzt und durch plastische Verformung des Flansches in ihrer Lage gesichert werden.

7. Verfahren nach Anspruch 6,
dadurch gekennzeichnet,
daß die Wuchtgewichte in den Wuchtbohrungen durch thermoplastische Verformung des Kunststoffes mit Erwärmung mittels Ultraschall gesichert werden.

8. Verfahren nach Anspruch 6,
dadurch gekennzeichnet,
daß die Wuchtgewichte in den Wuchtbohrungen durch thermoplastische Verformung des Kunststoffes mittels Heißprägen gesichert werden.

9. Verfahren zum Auswuchten eines Anschlußteiles aus Kunststoff, mit einer antriebseitigen Zentrierung, einem radialen Flansch und einem wellenseitigen Anschlußstutzen zur Verbindung mit einer Kardanwelle eines Kraftfahrzeugs, nach einem oder mehreren der Ansprüche 3 bis 5,
dadurch gekennzeichnet,
daß in durch Rotationsmessungen bestimmte Öffnungen, in den Flansch Wuchtgewichte mit gegenüber den Mitteln zur Verengung größerem Durchmesser eingesetzt und durch elastisches Rückfedern derselben in ihrer Lage gesichert werden.

## Claims

1. A connecting part for cardan shafts, having centring means at the drive end, a radial flange and a connecting piece at the shaft end for establishing a connection with a cardan shaft of a motor vehicle,
characterised in
that the flange (2) is a plastic injection moulding and, in its radially outer region, is provided with a plurality of moulded apertures (9) for receiving balancing weights (11).

2. A connecting part according to claim 1,
characterised in
that the apertures (9) are axially extending blind holes.

3. A connecting part according to any one of claims 1 or 2,
characterised in
that the apertures (9) comprise elastically resilient means (8) for narrowing the cross-section of the apertures.

4. A connecting part according to any one of claims 1 to 3,
characterised in
that the apertures (9) are provided on a pitch circle (10) of the flange (2), which pitch circle extends concentrically relative to the centring means (5).

5. A connecting part according to any one of claims 1 to 4,
characterised in
that the flange (2) consists of a thermoplastic material.

6. A method of balancing a plastic connecting part having centring means at the drive end, a radial flange and a connecting piece at the shaft end for establishing a connection with a cardan shaft of a motor vehicle, according to one or several of claims 1 to 5,
characterised in
that the flange apertures determined by rotational measurements are provided with inserted balancing weights whose diameter is adapted to the aperture diameter and which are secured in their position by plastic deformation of the flange.

7. A method according to claim 6,
characterised in
that the balancing weights in the balancing bores are secured by thermoplastic deformation of the plastic material and that heating is effected by ultrasound.

8. A method according to claim 6,
characterised in
that the balancing weights in the balancing bores are secured by thermoplastic deformation of the plastic material by means of hot stamping.

9. A method of balancing a plastic connecting part having centring means at the drive end, a radial flange and a connecting piece at the shaft end for establishing a connection with a cardan shaft of a motor vehicle, according to one or several of claims 3 to 5,
characterised in
that the flange apertures determined by rotational measurements are provided with inserted balancing weights whose diameter is greater than that of the narrowing means and which are secured in their position as a result of the elastic spring-back of the latter.

## Revendications

1. Pièce de raccordement pour un arbre de cardan, comprenant un centrage du côté entraînement, une bride radiale et un manchon de raccordement du côté arbre, en vue du raccordement avec un arbre de cardan d'un véhicule automobile, caractérisée en ce que la bride (2) est une pièce de matière plastique moulée par injection et en ce qu'elle pourvue dans sa région radiale extérieure d'une pluralité d'ouvertures (9) formées en creux afin de recevoir des poids d'équilibrage (11).

2. Pièce de raccordement selon la revendication 1, caractérisée en ce que les ouvertures (9) sont des trous borgnes qui s'étendent en direction axiale.

3. Pièce de raccordement selon l'une ou l'autre des revendications 1 et 2, caractérisée en ce que les ouvertures (9) comprennent des moyens (8) à déformation élastique afin de rétrécir la section d'ouverture.

4. Pièce de raccordement selon l'une quelconque des revendications 1 à 3, caractérisée en ce que les ouvertures (9) sont prévues sur un cercle partiel (10) de la bride (2) qui s'étend concentriquement au centrage (5).

5. Pièce de raccordement selon l'une quelconque des revendications 1 à 4, caractérisée en ce que la bride (2) est réalisée en une matière plastique thermoplastique.

6. Procédé d'équilibrage d'une pièce de raccordement en matière plastique qui comporte un centrage du côté entraînement, une bride radiale et un manchon de raccordement côté arbre en vue du raccordement avec un arbre de cardan d'un véhicule automobile, selon une ou plusieurs des revendications 1 à 5, caractérisé en ce que l'on met en place des poids d'équilibrage adaptés en diamètre dans des ouvertures dans la bride déterminées par des mesures de rotation, et en ce qu'on les assure en position par déformation plastique de la bride.

7. Procédé selon la revendication 6, caractérisé en ce que les poids d'équilibrage sont assurés dans les perçages d'équilibrage par déformation thermoplastique de la matière plastique par réchauffement au moyen d'ultrasons.

8. Procédé selon la revendication 6, caractérisé en ce que les poids d'équilibrage sont assurés dans les perçages d'équilibrage par déformation thermoplastique de la matière plastique au moyen d'une impression à chaud.

9. Procédé d'équilibrage d'une pièce de raccordement en matière plastique, qui comprend un centrage du côté entraînement, une bride radiale et un manchon de raccordement côté arbre, en vue du raccordement à un arbre de cardan d'un véhicule automobile, selon l'une ou plusieurs des revendications 3 à 5, caractérisé en ce que l'on met en place des poids d'équilibrage dans la bride, dans des ouvertures déterminées par des mesures de rotation, lesdits poids d'équilibrage ayant un diamètre supérieur aux moyens de rétrécissement, et étant assurés dans leur position par retour élastique desdits moyens.
